Europäisches Patentamt

(19) European Patent Office

Office européen des brevets

(11) EP 0 848 345 A2

(12) EUROPEAN PATENT APPLICATION

(43) Date of publication:
17.06.1998 Bulletin 1998/25

(51) Int. Cl.⁶: **G06K 9/00**

(21) Application number: 97121834.2

(22) Date of filing: 11.12.1997

(84) Designated Contracting States:
AT BE CH DE DK ES FI FR GB GR IE IT LI LU MC
NL PT SE
Designated Extension States:
AL LT LV MK RO SI

(30) Priority: 11.12.1996 JP 346477/96

(71) Applicant: CADIX INC.
Tokyo 154 (JP)

(72) Inventor: Muroya, Masami
Tokyo 154 (JP)

(74) Representative:
Weisert, Annekäte, Dipl.-Ing. Dr.-Ing. et al
Patentanwälte
Kraus Weisert & Partner
Thomas-Wimmer-Ring 15
80539 München (DE)

(54) **Handwritten character verification method and apparatus therefor**

(57) Coordinate information and writing speed information relating to handwritten characters are acquired as three-dimensional time series information. Input handwritten character data and registered handwritten character data are corrected by dynamic processing matching through use of warping functions which minimize a cumulative error between these sets of data. The authenticity of the input characters is verified by means of the degree of difference in the overall character patterns thus obtained by comparison of the corrected sets of data with each other.

| | |
|---|---|
| RETRIEVE REGISTERED DATA | STEP-1 |
| INPUT SIGNATURE DATA | STEP-2 |
| NORMALIZE POSITION AND SIZE | STEP-3 |
| CALCULATE WRITING SPEED | STEP-4 |
| ELIMINATE UNIFORM STROKE COMPONENT | STEP-5 |
| OBTAIN WARPING FUNCTION | STEP-6 |
| OBTAIN DEGREE OF DIFFERENCE IN SHAPE | STEP-7 |
| OBTAIN DEGREE OF DIFFERENCE IN MOTION | STEP-8 |
| IDENTIFY SIGNER | STEP-9 |

FIG. 2

**Description**

BACKGROUND OF THE INVENTION

Field of the Invention:

The present invention relates to a signature verification method and to an apparatus for verifying the authenticity of a signature made up of handwritten characters.

Description of the Related Art:

A handwritten character recognition method by which written characters are recognized has been utilized as an input method for word processors or a signature verification method for specifying a writer.

Under a handwritten character recognition method which has already been in actual use as an input method, characters are input in the block style under specified constraints on the style of typeface, and the thus-input characters are converted into coordinate information. The thus-converted coordinate information is verified by comparison with coordinate information relating to character data which have been stored beforehand. As a result of verification, the characters are recognized as matched. If characters are carefully written in the block style at comparatively slow speed in the manner as previously described, the characters can be sufficiently recognized through use of only coordinate information because under such conditions each of the strokes of the characters becomes clear by virtue of visual feedback to the writer and hence the shape of the characters becomes stable.

In contrast, in a case where the character recognition method is applied to an input method which does not pose any restriction on the style of typeface at the time of input of characters or to a signature verification method, there must be recognized not only characters written in the block type but also cursively written characters. When characters are cursively written, writing motion becomes faster and does not involve any substantial visual feedback to the writer. In this case, the characters become less identifiable, and separation of a resultantly acquired pattern into strokes becomes difficult. This is because an expansion or contraction of the pattern in the direction of the time axis or in the direction of stroke, or the difference between the input pattern and a pre-registered pattern, becomes greater. For this reason, a matching rate is extremely low, rendering identification of characters difficult.

Another method is to enable recognition of characters without involving the separation of characters into strokes by application of coordinate information and writing pressure. This method employs a pattern matching technique called dynamic programming (DP) matching, which takes into consideration variations in the coordinate information stemming from variations in writing action.

In the dynamic processing matching technique, variations in the writing motion are corrected with regard to the time axis or the arc length axis through use of a warping function which minimizes a cumulative error between patterns to be checked. Patterns are matched with each other on the basis of the coordinates and writing pressure that have been corrected so as to compensate variations in the writing motion, thereby enabling recognition of cursively handwritten characters.

Verification based on the addition of writing pressure information to coordinate information or normalization of input patterns by DP matching contributes to an improvement in the recognition rate of handwritten characters. However, in the case of application of the dynamic processing matching technique to recognition of cursively written characters or signature verification, a false signature may be erroneously recognized as a genuine signature. Therefore, in its present form, the dynamic processing matching technique cannot be put into practical use.

Japanese Patent No. 1,822,532 [Japanese Patent Publication (*kokoku*) No. 5-31798] entitled "A Method of Recognizing Handwritten Characters Online" describes a practical technique that is based on dynamic processing matching. Under this method, when the degree of difference between a registered pattern and an input pattern of handwritten characters is calculated by use of dynamic processing matching, coordinate information and writing pressure information are simultaneously processed by the assignment of optimum weighting coefficients to the coordinate information and writing pressure information. As a result, the difference is reduced, which in turn contributes to an improvement in the verification rate of authenticity and a reduction in processing time.

As mentioned previously, even in the case of unclear characters which cannot be separated into strokes, processing of the coordinate information and writing pressure information relating to handwritten characters enables recognition of the characters. Further, even in the case of cursively handwritten characters, the characters can be recognized in practice, as a result of a further improvement in the dynamic processing matching technique that compensates variations in writing motion in order to correct cumulative errors.

In recent years, the majority of portable data terminals, such as notebook computers, electronic pocketbooks, pen-type computers, that have come into wide use in the home have allowed pen input. However, the input specifications of a pen which is a standard accessory usually do not enable measurement of writing pressure. Verification of an individual based on handwritten characters input from such a pen input terminal entails verification of an individual solely based on coordinate information (or the shape of characters). However, only the information relating to the appearance of characters, such as the sizes, shapes, and angles of characters, can be determined from coordinate information. As such, characters are vulnerable to being forged by another person, and the identification rate of an individual is apt to decrease.

SUMMARY OF THE INVENTION

An object of the present invention is to improve the matching rate in a case where an individual is identified by handwritten characters, by realization of more accurate identification of an individual with the help of additional information.

Another object of the present invention is to improve the matching rate to a much greater extent even in a case where coordinate information and writing pressure information can be input.

To accomplish the foregoing objects, according to one aspect of the present invention, there is provided a handwritten character verification method by which the matching of characters is determined by acquisition of handwritten characters as time series information including coordinate information, and by comparison of the acquired time series information with handwritten character data registered beforehand, the method comprising the steps of acquiring coordinate information and writing speed information relating to the handwritten characters as three-dimensional time series information; correcting the acquired handwritten character data through use of a warping function in order to minimize a cumulative error between the acquired handwritten character data and the registered handwritten character data; comparing the corrected handwritten character data with the registered handwritten character data by dynamic processing matching to obtain a degree of an overall difference between the acquired and corrected handwritten character data and the registered handwritten character data; and determining whether the handwritten characters are true or false on the basis of the degree of the overall difference.

According to another aspect of the present invention, in a case where an input device can acquire writing pressure information, there is provided a handwritten character verification method by which the matching of characters is determined by acquisition of handwritten characters as time series information including coordinate information, and by comparison of the acquired time series information with handwritten character data registered beforehand, the method comprising the steps of acquiring the coordinate information, writing pressure information, and writing speed information relating to the handwritten characters as four-dimensional time series information; correcting the acquired handwritten character data through use of a warping function in order to minimize a cumulative error between the acquired handwritten character data and the registered handwritten character data; comparing the corrected handwritten character data with the registered handwritten character data by dynamic processing matching to obtain a degree of an overall difference between the acquired and corrected handwritten character data and the registered handwritten character data; and determining whether the handwritten characters are true or false on the basis of the degree of the overall difference.

Various types of writing speed information can conceivably serve as the writing speed information employed by the present invention. Writing speed has the disadvantage of instability in a high-speed region. The stability of the writing speed can be improved through use of reverse writing speed to which there is defined a certain upper limit. Reverse writing speed $s(l)$ is defined as follows by the upper limit value $s_{max}$ and writing speed $s_o(l)$ at each sampling point:

$$s(l) = s_{max} - so(l).$$

When $s(l) < 0$, $s(l) = 0$. In many cases, the speed of the tip end of a pen becomes unstable while the pen is moved in the air. For this reason, a much better result is ensured by elimination of such speed. To this end, it is desirable that $s(l) = 0$ be taken as the reverse writing speed obtained when the pen is moved in the air.

In the case of processing the foregoing three-dimensional or four-dimensional character data, when the characters to be matched and the registered characters are compared with each other, the coordinate information is normalized, in which variations in the direction and size of a character string are corrected and a uniform stroke component—which is a fixed element—is eliminated. As a result, a velocity component of the tip end of the pen is lost. However, this velocity component includes stable handwriting information peculiar to the writer.

According to the present invention, the authenticity of characters is verified by combination of the coordinate information and the velocity component, which are simultaneously processed. In comparison with use of mere coordinate information, or two-dimensional information, the use of three-dimensional character data according to the present invention enables verification to eliminate another person. Further, if four-dimensional information is employed, there is realized a much higher degree of verification for eliminating another person.

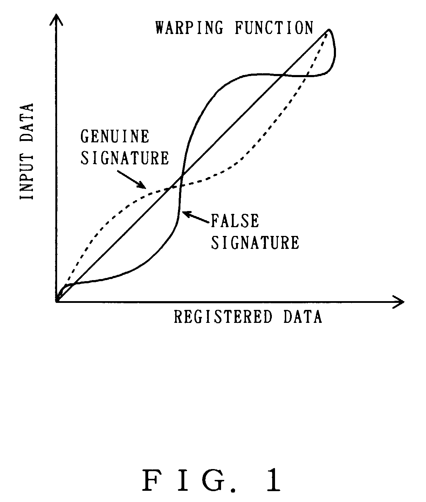

In signature verification, a difference in writing motion; i.e., the degree of difference in motion, is used as a very effective element for identification, along with the shape of a signature (or handwriting). Time axis warping function includes the degree of difference of time-axis variations in an input pattern (data to be checked) with respect to a registered pattern (reference data); namely, the degree of difference in motion between the patterns. If the input pattern completely matches the registered pattern, the warping function represents a straight line (a diagonal line shown in FIG. 1) having a slope of one. The greater the deviation from the diagonal line, the smaller the degree of agreement between the signatures. Everybody has fluctuations in writing motion, regardless of time and place. The warping function usually takes a variable curved shape with respect to the line. However, as shown in FIG. 1, a false signature has a great variation when compared with a genuine signature and tends to produce a zigzag pattern. From this viewpoint, a signature which produces a great variation or a noticeable zigzag pattern with respect to the diagonal line can be deemed a false signature.

In the present invention, the difference in motion between the two patterns is calculated through use of a warping function. Further, a distance function representing the degree of difference between the patterns is calculated from a coordinate system and a writing speed system. The thus-calculated distance function is defined as the degree of difference in shape between the patterns. Taking as parameters the degree of difference in motion and the degree of difference in shape between the patterns, a false/genuine discriminant function is introduced, and the input pattern is judged to be false or genuine through use of this function.

With regard to the characters used as the standards for verification (i.e., registered characters) and characters to be checked, data are obtained by sampling of coordinate information and writing speed information at equal time intervals. The thus-obtained data are normalized to correspond to an equal number of sampling points and are further preliminarily normalized with regard to position and size. For example, in the case of lateral writing action, a pen is moved from left to right in many cases. Such constant motion may hinder verification of the characters. For this reason, it is desirable to calculate a uniform stroke component from the pattern and to subtract the thus-obtained uniform stroke component from the coordinate information normalized with respect to position and size.

The characters to be used as the standards for verification are registered beforehand. At this time, in order to facilitate arithmetic operation, there are registered data which are sampled at a constant number of sampling points. When characters are registered, data are acquired by the same characters, such as a signature, being written a plurality of times, and optimum data is selectively registered. Determination elements obtained through dynamic processing matching or identification of handwritten characters can also be utilized when optimum data are selected.

The preliminarily-normalized coordinate information and writing speed information are corrected by dynamic processing matching through use of a time axis warping function which minimizes cumulative errors of the coordinate information and the writing speed information with respect to the time axis. As a result, the degree of difference in coordinate information and the degree of difference in writing speed are obtained, and the thus-obtained differences are taken as determination elements.

Alternatively, verification can be performed through use of time series data which are obtained by sampling or converting the coordinate information and the writing speed information at constant arc length intervals. However, if the degree of difference in writing motion is added as a discriminant element, verification must be performed through use of time series data which are obtained through sampling or conversion at constant time intervals. When the coordinate information and the writing speed information are processed by dynamic processing matching, they may be simultaneously processed by the assignment of optimum weighting coefficients to the coordinate information and the writing speed information, as described in Japanese Patent No. 1,822,532 entitled "A Method of Recognizing Written Characters Online."

BRIEF DESCRIPTION OF THE DRAWINGS

FIG. 1 is a plot showing a time axis warping function of a false signature detectable by a handwritten character recognition method according to an embodiment of the present invention:

FIG. 2 is a flowchart showing signature verification processing according to the present invention;

FIG. 3 is a schematic representation showing a signature data input device according to the present invention;

FIG. 4 is a plot showing a warping function employed in the handwritten character recognition method according to the embodiment; and

FIG. 5 is a plot used for verifying the authenticity of a signature on the basis of the degree of difference in motion and difference in shape between patterns by the handwritten character recognition method according to the embodiment.

DESCRIPTION OF THE PREFERRED EMBODIMENT

With reference to the accompanying drawings, an embodiment of the present invention will be described.

Handwritten character recognition according to the present invention involves acquisition of the coordinate information and writing speed information relating to characters to be verified, or acquisition of the coordinate information, writing speed information, and writing pressure information relating to the characters to be verified; and arithmetic processing of these sets of information. To this end, there are needed means for measuring the coordinate information and writing pressure information relating to handwritten characters in time sequence, and arithmetic processing means for processing the thus-obtained sample data. The coordinate information and writing pressure information measured by sampling the written characters at preset time intervals take the form of three-dimensional time series data. However, these sets of information are represented as data series comprising complex coordinate series and writing pressure series. The means for measuring the coordinate information and writing pressure information comprises; e.g., a stylus pen having a built-in pressure sensor and a digitizer for detecting the coordinates of the tip end of a pen.

Next, writing speed handled in the present invention will be described. A speed at which a pen is moved; namely, writing speed, is calculated from the coordinate information acquired in time sequence. Taking the coordinates of the pen at sample time $t_l$ and time $t_{l+1}$ as $(x_l, y_l)$ and $(x_{l+1}), (y_{l+1})$, the distance $u_l$ between the coordinates over which the pen is moved is represented as

$$u_l = \{(x_{l+1} - x_l)^2 + (y_{l+1} - y_l)^2\}^{1/2}$$

If writing speed is defined as a distance over which the pen travels within a period of unit sample time, travel distance $u_l$ corresponds to writing speed. Taking writing speed $s_o(l)$ at each sampling point as an average of the speed at which the pen travels from a preceding sampling point to the current sampling point and the speed at which the pen travels from the current sampling point to a subsequent sampling point, the writing speed is represented as

$$s_o(l) = \{u(l-1) + u(l)\} / 2.$$

Writing speed has the disadvantage of instability in a high-speed region. For this reason, an extremely high-speed region is removed by calculation of reverse writing speed S(l) with the maximum limit being set to a value twice as large as the average of writing speed. When the writing speed is slow, the numerical value of the reverse writing speed is increased. In contrast, when the writing speed is high, the numerical value of the reverse writing speed is reduced. As a result, the stability of detection of the writing speed is improved. If the writing speed $S_0(l)$ at each sampling point is calculated, an average writing speed $S_{av}$ is given by

$$S_{av} = \left\{ \sum_{l=1}^{L} s_0(l) \right\} / L$$

The reverse writing speed S(l) is obtained from the mean writing speed $S_{av}$ and the writing speed $s_o(l)$ at each sampling point:

$$S(l) = 2Sav - s_o(l)$$

where when S(l) < 0, S(l) = 0.

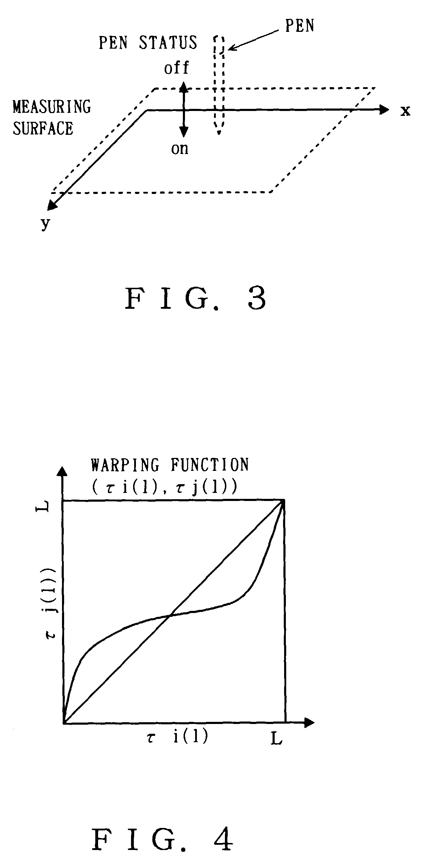

Also, the pen tends to become unstable when it moves from a character to another character. Namely, when the pen moves in the air, its writing speed becomes unstable. Stable writing speed information can be obtained by elimination of the writing speed of the pen when it is in the air. To this end, the coordinates (x, y) of the tip end of the stylus pen are measured as two-dimensional coordinates, and the state of the tip end of the stylus pen in terms of whether or not the tip end is in contact with the surface of the digitizer is measured as pen status ps (FIG. 3). The state of the stylus pen is sampled at equal time intervals, and the result of sampling is acquired as time series information. The thus-sampled data are acquired in the form of data relating to the coordinates (x, y) and the pen status data ps, as represented by

$$\{x(n), y(n), p_s(n)\}_{n=1}^{N}$$

where ps(n) is in the form of binary information represented by 0 or 1.
These values represent the following conditions;

ps (n) = 0 ..... the pen is out of contact with the surface of the digitizer
ps (n) = 1 ..... the pen is in contact with the surface of the digitizer

Through use of the pen status, there is removed the writing speed of the tip end of the pen when it is moved in the air. More specifically, when ps(l) = 0, the reverse writing speed S(l) is set to zero.
The following equation obtained through the foregoing operations will herein be referred to as reverse writing speed

series.

$$\{s(l)\}_{l=1}^{L}$$

In the following descriptions, a simple expression "writing speed series" will designate the reverse writing speed series.

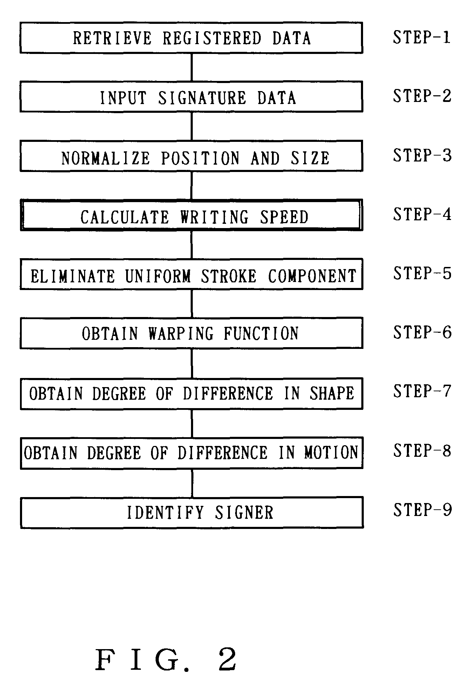

An embodiment of the present invention will be described with reference to a signature verification flowchart shown in FIG. 2.

Step-1: Retrieving Registered Signature Data

Registered signature data are data relating to a signature made by a signer beforehand and registered. The registered signature data are retrieved in the form of three-dimensional time series data, as shown below, in which the coordinates (x, y) and the writing speed "s" are taken for the number of sampling points L.

$$\{z_r(l), s_r(l)\}_{l=1}^{L}$$

where $z_r(l)$ represents complex coordinate series represented as

$$z_r(l) = x_r(l) + iy_r(l).$$

Here, $i = (-1)^{1/2}$.

Step-2: Signature Data Input

With regard to the input of signature data, the sampled data are input as data relating to the coordinates (x, y) and the pen status ps in the form represented by Equation 2. The term ps(n) is in the form of binary information represented by 0 or 1. These values represent the following conditions:

ps(n) = 0 ... the pen is out of contact with the surface of the digitizer
ps(n) = 1 ... the pen is in contact with the surface of the digitizer

Step-3: Normalization of Position and Size

The input signature data (i.e., signature data to be checked) change in inclination and size depending on the posture, location, and mental condition of the signer when he or she writes a signature. It is difficult to check the thus-input signature data against the registered signature data, exactly as they are. Therefore, the input signature data are subjected to normalization of position and size according to the following procedures.

First, with respect to the input signature data, there are prepared new data in which the time intervals are made equal or the number of sampling points is made equal. More specifically, the following equation will be obtained.

$$\{z(l), ps(l)\}_{l=1}^{L}$$

where L is the number of new sampling points and made constant or equal between the registered signature data and the input signature data. In addition, new complex coordinate series used for the purpose of normalization are defined as

$$z_i(l) = \{z(l) - zg\} / \|z(l) - zg\|$$

where zg represents the centroid of a signature pattern and is defined as

$$zg = \left\{ \sum_{l=1}^{L} |z(l)|^2 \right\} / L$$

Also, the symbol $\| \cdot \|$ represents the complex coordinate series norm, and is

$$\| z\ (l)\|^2 = \left\{ \sum_{l=1}^{L} |z(l)|^2 \right\} /L$$

Step-4 Calculation of Writing Speed

The reverse writing speed series are taken as writing speed series for verification determination and used in the subsequent processing.

Step-5: Elimination of Uniform Stroke Component

Arabic is written from right to left, but alphabetical characters such as those used in English are written from left to right. In contrast, Chinese characters are written from top to down, but a signature in Chinese characters is usually written from right to left. In any case, the coordinates of a signature tend to increase or decrease in a certain direction with lapse of time. From the viewpoint of checking a signature, it is desirable to eliminate such fixed motion. Accordingly, the uniform stroke components are eliminated from the coordinate data.

Assuming that the uniform stroke component is defined as

$$z_k(l) = \xi\{(l-1)/L\} + \eta,$$

the coordinate series from which the uniform stroke component has been removed are

$$\{z^*(l) = z_i(l) - z_k(l)\}_{l=1}^{L}$$

At this point in time, $\xi$ and $\eta$ are unknown values and selected so as to minimize $\|z^*(l)\|$. As a result, $\xi$ and $\eta$ are defined as

$$\xi = \left\{ \frac{12}{L^2} \right\} \cdot \left\{ \sum_{l=1}^{L} z_i(l) \cdot (l-1) \right\}$$

$$\eta = -\frac{\xi}{2}$$

The complex coordinate series obtained through the foregoing operations is represented as follows:

$$\{z^*(l)\}_{l=1}^{L}$$

The complex coordinate series is referred to as a normalized complex coordinate series which will be hereinafter be referred to simply as a complex coordinate series. Similarly, the writing speed information is normalized as follows:

$$s^*(l) = s(l) / \|s(l)\|.$$

The writing speed series which is newly obtained by normalizing and is represented as

$$\{s^*(l)\}_{l=1}^{L}$$

is hereinafter referred to as a normalized writing speed series which will hereinafter be referred to simply as a writing speed series.

As mentioned previously, the sampled input data are normalized with regard to the number of sampling points, position, and size and are prepared as writing speed series calculated from coordinate series from—which the uniform stroke component is removed—and the time series positional coordinates. Input signature data corresponding to the registered signature data are represented by the following expression.

$$\{z^*(l), s^*(l)\}_{l=1}^{L}$$

Steps-6, 7 Obtaining of Warping Function and Degree of Difference in Shape

In order to check the difference in shape between the registered signature and the input signature, the degree of difference between the registered signature data and the input signature data with regard to coordinates and writing speed. At this time, the coordinates and writing speed of the registered signature data and the input signature data are subjected to weighting for correction, such that the cumulative errors of the coordinate and writing speed of both patterns are minimized by dynamic processing matching.

Taking the registered signature data as a pattern A and the input signature data as a pattern B, the degree of difference between the i-th point of the pattern A and the j-th point of the pattern B is defined as

$$d^2(i, j) = (1-W_s)|z^*{}_A(i)-z^*{}_B(j)|^2 + W_s|S^*{}_A(i)-S^*{}_B(j)|^2$$

through use of the coordinate series and the writing speed series. Here, Ws is a weighting which satisfies $0 \leq Ws \leq 1$ and relates to writing speed series. In contrast, (1-Ws) is a weighting relating to the coordinate series.

In consideration of non-linear conversion between the patterns A and B, distance function representing the difference between the patterns is defined as follows

$$D_{shape}(A, B) = min \sum_{l=1}^{L} d(\tau i(l), \tau j(l))$$

where $\tau i(l)$, $\tau j(l)$ are functions which define the relation between the patterns A and B, and the point-to-point correspondence between the two patterns A and B is obtained so as to minimize the value of the function $D_{shape}$ (A, B).

The functions $\tau i(l)$, $\tau j(l)$ are referred to as time-axis warping functions, whilst the minimized $D_{shape}$ (A, B) function is referred to as a pattern-to-pattern matching distance. The following conditions are set with respect to the time axis warping functions $\tau i(l)$, $\tau j(l)$.

(1) Monotonicity:

Even in a case where every writer has his own stroke order, based on the assumption that the same writer will not change the stroke order of the same characters, the warping functions will be monotonous increasing functions. Therefore, $\tau i(l - 1) \leq \tau i(l)$, $\tau j(l - 1) \leq \tau j(l)$ are set.

(2) Continuity:

The coordinates and writing pressure continuously change from one stroke to another stroke, and hence the warping functions are also continuous functions.
Therefore, $|\tau i(l) - \tau i(l - 1)| \leq 1$, $|\tau i(l) - \tau j(l - 1)| \leq 1$ are set.

(3) Boundary Conditions:

In the present embodiment, the character pattern starting and end points are fixed. Therefore, the boundary conditions are set as follows:

$$\tau i(1) = \tau j(1) = 1, \tau i(L) = \tau j(L) = L.$$

In the present embodiment, the time axis of the pattern A of the registered signature data is fixed to $\tau i(l) = 1$, and the pattern B of the input signature data is warped with respect to the time axis. The pattern-to-pattern matching distance $D_{shape}(A, B)$ is taken as the degree of difference in shape between the patterns A and B.

Step-8: Obtaining of Degree of Difference in Motion

In signature verification, the difference in writing motions itself; namely, the degree of difference relating to motion, becomes a very effective discriminant element. The degree of difference in change between the registered signature pattern and the input signature pattern with respect to the time axis is included in the warping functions $\tau i(l)$ and $\tau j(l)$. When the patterns A and B completely match each other, the warping function takes the form of a straight line having a slope of one, such as that represented in the plot shown in FIG. 4; i.e., a diagonal line.

The pattern of signature data usually includes a nonlinear error in the direction of the time axis. Provided that the warping functions $\tau i(l)$ and $\tau j(l)$ are represented as those shown in the drawing, the error takes the form of a curve with respect to the diagonal line. The variation with respect to the diagonal line represents the difference in writing motion between the registered signature pattern and the input signature pattern with respect to the time axis. When the signature written by the true signer is compared with the signature written by false signer, an error in the false signature tends to become greater (see FIG. 1).

In general, the degree of difference in motion can be represented as a cumulative error between the diagonal line and the warping functions $||\tau j(l) - \tau i(l)||$. However, in the case of the cumulative error in the warping functions, local variations greatly affect the magnitude of variations in the overall signature, increasing the degree of difference in motion. Because of this, it is necessary to define a distance function which prevents cumulative local variations. To this end, the amount of variation in the warping functions with respect to the diagonal line is defined as

$$\lambda(l) = \tau j(l) - \tau i(l) \quad \tau i(l) = 1,2,.....,L \ .$$

The amount of variation represents the distance between the diagonal line and the warping functions at a certain time. The strength of variation corresponds to the speed at which the warping functions depart from the diagonal line. The speed is calculated as the first derivative $\lambda'(l)$ of the function $\lambda(l)$. From the five-point formula for numerical differentiation, the first derivative $\lambda'(l)$ is

$$\lambda'(l) = \{\lambda(l - 2) - 8\lambda(l - 1) + 8\lambda(l + 1) - \lambda(l + 2\}/12 \ .$$

Taking $\lambda'(l)$ as distance function, the degree of difference in motion between the patterns A, B is determined as

$$D_{motion}(A, B) = ||\lambda'(l)||.$$

Step-9: Signer Identification

In the present invention, the authenticity of the signature is determined on the basis of the degree of difference in shape and motion between the signatures obtained through the foregoing processing, whereby a determination is made as to whether the signer is the true signer or a false signer. The degree of difference in shape and the degree of difference in motion are plotted on a two-dimensional map, and the authenticity of the signature is verified by the discriminant function G defined beforehand, or

$$G = G(D_{shape}(A,B), D_{motion}(A,B)).$$

A value obtained by the discriminant function G is expressed as the degree of authenticity.

$$G = 100\% \rightarrow \text{Genuine Signature}$$

$$G = 0\% \rightarrow \text{False Signature}$$

In a case where the signature is subjected to authenticity verification by expanding on the map the degree of difference relating to shape and the degree of difference relating to motion, the signature situated on the demarcation line or in the interface surface between the genuine signature region and the false signature region generally requires delicate judgment.

If a region having a certain extent is set in the boundary area,
$0\% < G < 100\% \rightarrow$ The signature is determined to be neither genuine nor false.

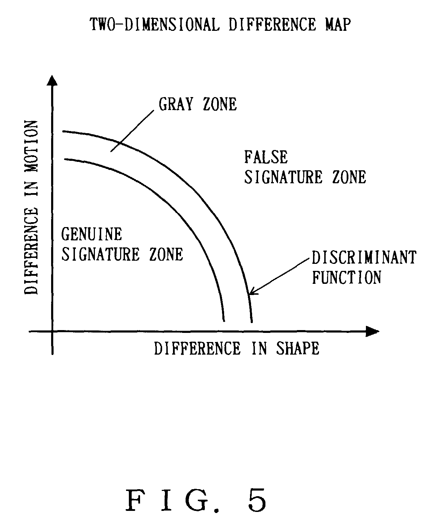

As shown in FIG. 5, the boundary area is an intermediate region between a genuine signature region and a false signature region. The intermediate region is defined as a gray zone. If G is located in the gray zone, re-entry of a signature is required, or a certain security level is set for the gray zone. The signature is judged to be genuine or false on the basis of the level of security and the degree of authenticity G. In any event, the verification of the signature based on the degree of authenticity G facilitates a change in the degree of judgment for each field of application or the definition of the discriminant function for each individual. As a result, providing a verification apparatus with flexibility becomes possible.

Verification of handwriting is usually based on the shape of already written characters. In such a case, a judgment is made on the shape of the characters, such as the size, inclination, roundness, or angularity of character; the running hand; and isolated characters; i.e., the characters written in the writer's own style. The writing pressure and speed can be estimated to a certain degree from paper quality, the type of pen, and the shape of character. It is very difficult to write characters having the same shape in the same stroke order while imitating the writing pressure and speed during the writing of certain characters. It is generally said that a person who has a strong writing pressure writes slowly, and a person who has a weak writing pressure writes fast. However, the relation between writing pressure and writing speed is not yet clear.

With regard to only writing speed, it may be possible to imitate the speed at which the overall signature is written through repeated visual observation of the signing action of the signer. However, imitation of writing speed at each stroke is an extremely difficult task.

The most distinguished characteristic of the present invention is that signature verification employs writing speed. If the present invention is employed, the writing speed can be calculated from the coordinates that have been acquired in time sequence, even in the case of pen input which does not involve measurement of writing pressure. Therefore, even in the case of a device which cannot realize verification through use of "coordinate information and writing pressure," verification can be achieved through use of "coordinate information and writing pressure." As a result, in comparison with verification based solely on coordinate information, the verification based on both coordinate information and writing pressure allows more accurate checking. Since the writing speed as defined in the present invention can be calculated, an individual verification system can be developed without need for additional device specifically designed for matching purposes.

In a device capable of measuring writing pressure, verification can be realized through use of four-dimensional time series information including writing pressure information. Writing pressure and writing speed are elements which are difficult to imitate without observation of signing action. Speed information relating to the tip end of the pen at each moment is added to the motion of the pen while it is in the air (or an aerial component). In fact, the aspect of handwriting which another person cannot imitate is analyzed. In this way, since in the present invention there is performed verification of aspects of handwriting which are difficult to imitate, another person can be highly accurately eliminated. Accordingly, in comparison with an existing verification system, a considerably high matching rate (or the degree of identification of a signer) can be attained.

**Claims**

1. A handwritten character verification method by which the matching of characters is determined by acquisition of handwritten characters as time series information including coordinate information, and by comparison of the acquired time series information with handwritten character data registered beforehand, the method comprising the steps of:

   acquiring coordinate information and writing speed information relating to the handwritten characters as three-dimensional time series information;
   correcting the acquired handwritten character data through use of a warping function in order to minimize a cumulative error between the acquired handwritten character data and the registered handwritten character data;
   comparing the corrected handwritten character data with the registered handwritten character data by dynamic processing matching to obtain a degree of an overall difference between the acquired and corrected handwritten character data and the registered handwritten character data; and
   determining whether the handwritten characters are true or false on the basis of the degree of the overall difference.

2. The handwritten character verification method as defined in claim 1, wherein the writing speed information is reverse writing speed s(l) at each sampling point which is defined as follows:

$$s(l) = s_{max} - s_o(l),$$

   wherein $s_o(l)$ is writing speed at each sampling point, and $s_{max}$ is an upper limit value for the writing speed, and wherein s(l) is set to zero when s(l) < 0 or when the pen is moved in the air.

3. A handwritten character verification method by which the matching of characters is determined by acquisition of handwritten characters as time series information including coordinate information, and by comparison of the acquired time series information with handwritten character data registered beforehand, the method comprising the steps of:

   acquiring the coordinate information, writing pressure information, and writing speed information relating to the handwritten characters as four-dimensional time series information;
   correcting the acquired handwritten character data through use of a warping function in order to minimize a cumulative error between the acquired handwritten character data and the registered handwritten character data;

comparing the corrected handwritten character data with the registered handwritten character data by dynamic processing matching to obtain a degree of an overall difference between the acquired and corrected handwritten character data and the registered handwritten character data; and

determining whether the handwritten characters are true or false on the basis of the degree of the overall difference.

4. The handwritten character verification method as defined in claim 3, wherein the writing speed information is reverse writing speed s(l) at each sampling point which is defined as follows:

$$s(l) = s_{max} - s_o(l),$$

wherein $s_o(l)$ is writing speed at each sampling point, and $s_{max}$ is an upper limit value for the writing speed, and wherein s(l) is set to zero when s(l) < 0 or when the pen is moved in the air.

5. A handwritten character verification apparatus which acquires handwritten characters as time series information including coordinate information and verifies the characters by comparison of the acquired time series information with handwritten character data registered beforehand, the apparatus comprising:

means for acquiring coordinate information and writing speed information relating to the handwritten characters as three-dimensional time series information;
means for correcting the acquired handwritten character data through use of a warping function in order to minimize a cumulative error between the acquired handwritten character data and the registered handwritten character data;
means for comparing the corrected handwritten character data with the registered handwritten character data by dynamic processing matching to obtain a degree of an overall difference between the acquired and corrected handwritten character data and the registered handwritten character data; and
means for determining whether the handwritten characters are true or false on the basis of the degree of the overall difference.

6. The handwritten character recognition apparatus as defined in claim 5, wherein the writing speed information is reverse writing speed s(l) at each sampling point which is defined as follows:

$$s(l) = s_{max} - s_o(l),$$

wherein $s_o(l)$ is writing speed at each sampling point, and $s_{max}$ is an upper limit value for the writing speed, and wherein s(l) is set to zero when s(l) < 0 or when the pen is moved in the air.

7. A handwritten character recognition apparatus which acquires handwritten characters as time series information including coordinate information and verifies the characters by comparison of the acquired time series information with handwritten character data registered beforehand, the apparatus comprising:

means for acquiring the coordinate information, writing pressure information, writing speed information relating to the handwritten characters as four-dimensional time series information;
means for correcting the acquired handwritten character data through use of a warping function in order to minimize a cumulative error between the acquired handwritten character data and the registered handwritten character data;
means for comparing the corrected handwritten character data with the registered handwritten character data by dynamic processing matching to obtain a degree of an overall difference between the acquired and corrected handwritten character data and the registered handwritten character data; and
means for determining whether the handwritten characters are true or false on the basis of the degree of the overall difference.

8. The handwritten character recognition apparatus as defined in claim 7, wherein the writing speed information is reverse writing speed s(l) at each sampling point which is defined as follows:

$$s(l) = s_{max} - s_o(l),$$

wherein $s_o(l)$ is writing speed at each sampling point, and $s_{max}$ is an upper limit value for the writing speed, and

wherein s(I) is set to zero when s(I) < 0 or when the pen is moved in the air.

F I G. 1

| | |
|---|---|
| RETRIEVE REGISTERED DATA | STEP-1 |
| INPUT SIGNATURE DATA | STEP-2 |
| NORMALIZE POSITION AND SIZE | STEP-3 |
| CALCULATE WRITING SPEED | STEP-4 |
| ELIMINATE UNIFORM STROKE COMPONENT | STEP-5 |
| OBTAIN WARPING FUNCTION | STEP-6 |
| OBTAIN DEGREE OF DIFFERENCE IN SHAPE | STEP-7 |
| OBTAIN DEGREE OF DIFFERENCE IN MOTION | STEP-8 |
| IDENTIFY SIGNER | STEP-9 |

F I G.  2

PEN STATUS

off

PEN

MEASURING
SURFACE

x

on

y

# F I G. 3

WARPING FUNCTION
$(\tau i(1), \tau j(1))$

L

$\tau j(1)$

$\tau i(1)$       L

# F I G. 4

TWO-DIMENSIONAL DIFFERENCE MAP

F I G. 5